# EUROPÄISCHE PATENTSCHRIFT

(11) **EP 1 093 713 B1**
(45) Veröffentlichungstag und Bekanntmachung des Hinweises auf die Patenterteilung: **17.07.2002**
(21) Anmeldenummer: 00117098.4
(22) Anmeldetag: 09.08.2000
(51) Int. Cl.: A01G 9/02

(54) **Hydrokulturtopf**
Pot for hydroponics
Pot pour hydroculture

(30) Priorität: 18.10.1999 DE 29918349 U
(43) Veröffentlichungstag der Anmeldung: 25.04.2001
(73) Patentinhaber: Schories, Axel, 85253 Kleinberghofen (DE); Stock, Udo, 85253 Unterweikertshofen (DE)
(72) Erfinder: Schories, Axel, 85253 Kleinberghofen (DE); Stock, Udo, 85253 Unterweikertshofen (DE)
(74) Vertreter: Dehmel, Albrecht, Dr.

(56) Entgegenhaltungen:
- EP-A- 0 878 124
- FR-A- 2 491 033
- FR-A- 2 610 787
- GB-A- 2 147 484
- US-A- 4 138 803

## Beschreibung

Die vorliegende Erfindung betrifft einen Hydrokulturtopf mit in seiner unteren Topfwand befindlichen Öffnungen, dadurch gekennzeichnet, daß die Topfwand temporär verschlossene oder verschließbare Durchbrüche aufweist.

Der Hydrokulturtopf ist für die Anzucht und Kultur von Hydrokulturen in seiner Bau- und Funktionsweise entwickelt worden. Pflanzen, die zur Anzucht in den Hydrokulturtopf gesetzt werden, erhalten durch Öffnungen im Topf in der wasserführenden Zone ihre Nährlösung. Durch das Substrat (Tongranulat) wird Nährlösung in die Feuchtzone transportiert, in der die Hauptwurzelentwicklung stattfindet. Und genau hier, im Bereich der Feuchtzone, muß der Topf während dieser Zeit verschlossen sein, damit ein guter Nährlösungstransport über das Tongranulat erfolgen kann. Somit ist eine optimale Wurzelentwicklung für eine gewisse Zeit garantiert, aber eben nur für die Anzucht der Pflanzen im Topf.

Nach Anzucht der Pflanzen kommen sie in den Handel. Sie werden vom Objektbegrüner (Hydrokulturgärtner) eingekauft und einzeln oder mit anderen Pflanzen in einem Hydrokulturgefäß zur weiteren Verwendung und Kultur plaziert. Bei einer guten Pflege und einem guten Standort entwickelt sich sowohl die Pflanze als auch ihre Wurzeln sehr schnell. Dabei ist das Wurzelwachstum eingeschränkt. Die Wurzeln können nur aus den Öffnungen des Hydrokulturtopfes wachsen, die sich in der wasserführenden Zone befinden. Somit verwurzelt der Hydrokulturtopf so stark, dass kaum noch Wurzelwachstum vorhanden ist. Eine gute Wurzeldurchlüftung ist daher auch nicht mehr gewährleistet. Und gerade die Wurzeldurchlüftung ist eine der wichtigsten Merkmale der gesunden Hydrokultur. Ist kein ausreichendes Wurzelwachstum und keine ausreichende Wurzeldurchlüftung gewährleistet, treten Pflanzenschäden und Schädlinge auf, die letztendlich zum Absterben der Pflanze führen können.

Daher liegt der vorliegenden Erfindung die Aufgabe zugrunde, einen Hydrokulturtopf bereitzustellen, das auch nach der Anzucht der Pflanzen ein ausreichendes Wurzelwachstum und eine ausreichende Sauerstoffzufuhr zu den Wurzeln gewährleistet.

Die Aufgabe wird durch den in den Patentansprüchen definierten Gegenstand gelöst.

Die Erfindung wird durch die folgenden Figuren erläutert.

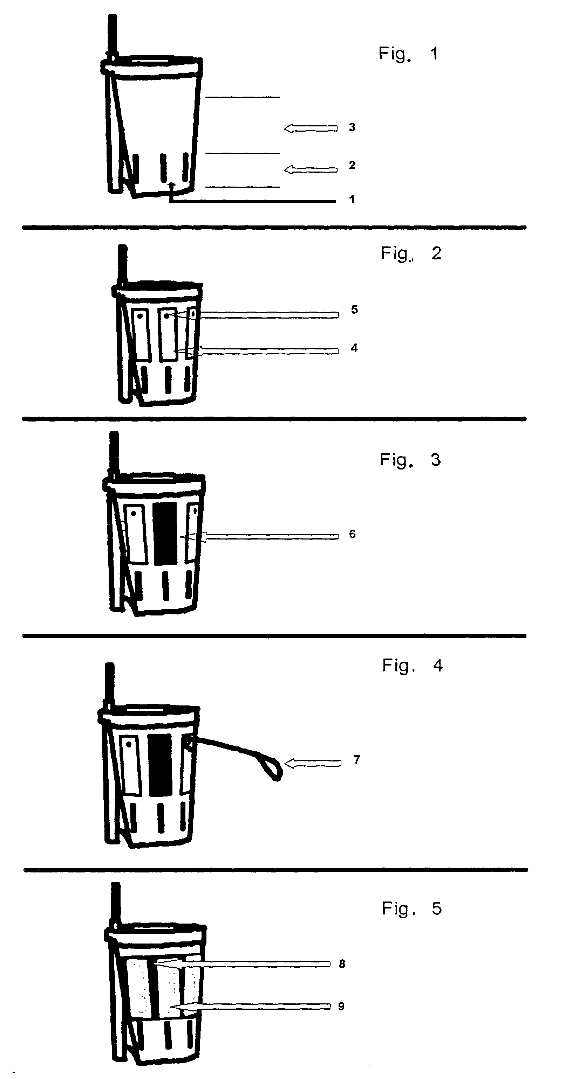

Figur 1 zeigt schematisch einen Hydrokulturtopf nach dem Stand der Technik. Der Topf enthält in der wasserführenden Zone (2) Öffnungen (1) und ist in der Feuchtzone (3) in seinem gesamten Umfang geschlossen. Durch die Topföffnungen gelangt Wasser und Nährlösung in das Innere des Topfes, in dem dann mittels des Substrats (Tongranulat) Wasser und Nährlösung in die Feuchtzone transportiert wird.

Figur 2 zeigt schematisch einen Hydrokulturtopf mit temporär verschlossenen Durchbrüchen (4) in der Feuchtzone. Die durch Materialschwächen definierten Durchbrüche weisen eine Öffnung (5) zum Ausbrechen der Durchbrüche auf.

Figur 3 zeigt schematisch einen Hydrokulturtopf mit einem ausgebrochenen Durchbruch (6).

Figur 4 zeigt schematisch einen Hydrokulturtopf mit einem Werkzeug (7) zum Ausbrechen des Durchbruchs.

Figur 5 zeigt schematisch eine Abdeckung (8), die schon vorhandene Öffnungen (9) luftdicht abdeckt.

Um dieses Problem zu beseitigen, stellt die vorliegende Erfindung einen Hydrokulturtopf bereit, das sowohl den Pflanzenproduzenten, den Objektbegrüner, als auch den Kunden und nicht zuletzt als Wichtigstes, die Pflanze voll zufrieden stellt. Jetzt kann sich die Wurzel im gesamten Hydrokulturtopf an den wichtigen Stellen voll ausbreiten und sich schön entwickeln. Auch eine hervorragende Sauerstoffzuführung ist jetzt gegeben.

Ein Aspekt der vorliegenden Erfindung betrifft einen Hydrokulturtopf mit in seiner Topfwand befindlichen Öffnungen, dadurch gekennzeichnet, daß die Topfwand temporär verschlossene oder verschließbare Durchbrüche aufweist.

Die Durchbrüche können dabei jede Form und Größe aufweisen. Bevorzugte Form der Durchbrüche ist eine rechteckige Form in der Art eines Fensters. Die Größen der Durchbrüche richten sich nach den jeweiligen Größen der Hydrokulturtöpfe. Die Position der erfindungsgemäßen Durchbrüche ist nicht festgelegt. Sie können sich sowohl oberhalb als auch im Bereich der bereits vorhandenen Öffnungen befinden. Ferner können sie sich über die gesamte Höhe des Topfes erstrecken.

Im Sinne der Erfindung bedeutet temporär verschlossen, daß die Durchbrüche zu jeder Zeit in den Hydrokulturtopf eingeführt werden können. Dazu werden in die Topfwand gezielt linienförmige Materialschwächen eingebracht, die die Form und Größe der einzuführenden Durchbrüche bestimmen. Die Materialschwächen können eingeführt werden, indem in ein schon hergestellter Hydrokulturtopf z.B. Perforierungen, Stanzungen oder Sollbruchstellen in die Topfwand eingebracht werden. Die Materialschwächen können ferner direkt bei der Herstellung des Hydrokulturtopfes eingearbeitet werden.

Sollen die Durchbrüche eingeführt werden, wird der Teil der Topfwand, der durch die Materialschwäche eingegrenzt ist, herausgebrochen. Dazu kann in dem herauszubrechenden Teil der Topfwand wiederum eine Vorrichtung vorgesehen sein, die das Herausbrechen erleichtert. Die Vorrichtung befindet sich vorzugsweise im oberen Drittel der herauszubrechenden Topfwand.

Die Vorrichtung kann eine Öffnung sein, die zur Aufnahme eines Werkzeugs, z.B. eines Hakens oder einer Kralle dient, mit dem der Durchbruch dann herausgebrochen werden kann. Vorzugsweise hat die Öffnung die Form einer Bohrung in beliebiger Größe abhängig von der Größe des herauszubrechenden Durchbruchs, bevorzugt in der Größe von 5 bis 15 mm, besonders bevorzugt in der Größe von 5 bis 10 mm, insbesondere bevorzugt in der Größe von 10 mm. Ferner kann die Vorrichtung ein Materialvorsprung, z.B. eine Lasche oder Öse oder sonstige vorstehende Teile sein, der dazu dient, den Teil der Topfwand herauszubrechen.

Im Sinne der Erfindung bedeuten verschließbare Durchbrüche, daß vorhandene Durchbrüche für eine gewünschte Zeit erneut verschlossen werden können. Dazu können die Durchbrüche mit einer Abdeckung verschlossen werden, die z.B. über die Durchbrüche aufgeklebt und bei Bedarf entfernt wird und so die Durchbrüche erneut freigibt. Die Abdeckung kann dabei die Durchbrüche vollständig oder zum Teil abdecken. Die Abdeckung kann aus demselben Material wie die Hydrokulturtöpfe sein oder ein Klebestreifen aus einem beliebigen Material sein. Bevorzugt ist die vollständige Abdeckung der Durchbrüche. Die erfindungsgemäßen Durchbrüche können z.B. direkt bei der Herstellung der Hydrokulturtöpfe eingeführt werden. Da sie für die Anzucht der Pflanzen jedoch im Bereich der Feuchtzone verschlossen sein müssen, werden sie für die Anzucht erneut verschlossen. Die Abdeckung kann dabei direkt ab Werk oder später angebracht werden. Die Abdeckung ist dabei der Art anzubringen, daß die Kapillarwirkung für den Wassertransport in die Feuchtzone erhalten bleibt.

Die erfindungsgemäßen Durchbrüche im Hydrokulturtopf können sich im Bereich der Feuchtzone und/oder im Bereich der Wasser oder Nährlösung führenden Zone befinden. Für den Zeitraum des Anziehens der Pflanzen im Hydrokulturtopf bis zum Verkauf bleiben die Durchbrüche temporär verschlossen. Das heißt, die Durchbrüche sind noch nicht herausgebrochen bzw. die Abdeckung ist noch nicht entfernt worden. Dadurch bleibt der Hydrokulturtopf im Bereich der Feuchtzone während der Anzucht der Pflanzen verschlossen. Der Transport von Wasser und Nährlösung in die oberen Bereiche des Hydrokulturtopfes ist somit für diesen angegebenen Zeitraum gesichert. Nach Beendigung der Pflanzenproduktion entspricht die Hydrokulturpflanze den Qualitätsnormen des "Fachverbandes Deutsche Hydrokultur im Zentralverband Gartenbau e. V. Bonn". Jetzt kann sie der Hydrokulturgärtner einkaufen, und zur weiteren Verwendung in Übertöpfe oder Großgefäße setzen.

Jetzt, in diesem Moment, beim Einsetzen in Übertöpfe oder Großgefäße können vom Hydrokulturgärtner die Durchbrüche z.B. mittels eines Werkzeugs entfernt oder durch Entfernen der Abdeckung freigelegt werden. Der erfindungsgemäße Hydrokulturtopf ist nun auch in der Feuchtzone geöffnet. Der Wasser- und Nährlösungstransport erfolgt dann nicht nur über den Hydrokulturtopf, sondern kann auch über das Tongranulat um den Topf herum erfolgen. Die Hydrokulturpflanze erhält dadurch im Wurzelbereich, innerhalb der Feuchtzone, die wesentlich bessere Durchlüftung (Sauerstoffzufuhr). Auch kann sie so mehr Schadstoffe aus der Raumluft entsorgen. Der wichtigste Punkt allerdings ist: sie hat jetzt die Möglichkeit, ihre Wurzeln durch die geöffneten Durchbrüche im gesamten Hydrokulturgefäß auszubreiten.

Die Folge ist: Die Hydrokulturpflanze fühlt sich wohl, das bedeutet eine schönere Pflanzenentwicklung, weniger Pflanzenblattschädigungen und weniger Schädlinge. Ein weiterer Vorteil der Erfindung besteht darin, daß nach dem Einführen der Durchbrüche die Pflanze ihren festen Stand im Hydrokulturtopf behält. Somit sind auch keine Beschädigungen an den frisch gezogenen Wurzeln zu befürchten. Zusätzlich bleibt ein fester Halt beim Plazieren in Großgefäße oder beim Transport zum Kunden erhalten. Der erfmdungsgemäße Hydrokulturtopf kommt dem Produzenten, dem Hydrokulturgärtner, dem Kunden, und nicht zuletzt der Pflanze zu Gute.

## Patentansprüche

1. Hydrokulturtopf mit in seiner unteren Topfwand befindlichen Öffnungen (1), **dadurch gekennzeichnet, daß** die Topfwand temporär verschlossene oder verschließbare Durchbrüche (4) aufweist.

2. Hydrokulturtopf nach Anspruch 1, **dadurch gekennzeichnet, daß** die verschlossenen Durchbrüche (4) gezielt eingebrachte linienförmige Materialschwächen aufweisen.

3. Hydrokulturtopf nach Anspruch 2, **dadurch gekennzeichnet, daß** die linienförmigen Materialschwächen gezielt eingebrachte Perforierungen, gezielt eingebrachte Stanzungen oder gezielt eingebrachte Sollbruchstellen sind.

4. Hydrokulturtopf nach einem der Ansprüche 1 bis 3, **dadurch gekennzeichnet, daß** die verschlossenen Durchbrüche (4) Vorrichtungen (5) zum Entfernen der Durchbrüche enthalten.

5. Hydrokulturtopf nach Anspruch 4, **dadurch gekennzeichnet, daß** die Vorrichtungen Öffnungen (5) oder Materialvorsprünge sind.

6. Hydrokulturtopf nach Anspruch 1, **dadurch gekennzeichnet, daß** die verschließbaren Durchbrüche (4) mit einer temporären Abdeckung (8) versehen sind.

7. Hydrokulturtopf nach Anspruch 6, **dadurch gekennzeichnet, daß** die temporäre Abdeckung (8) über die Durchbrüche geklebt ist.

## Claims

1. A pot for hydroponics, wherein apertures (1) are arranged in the lower wall of the pot, **characterized by** the fact that the wall of the pot contains openings (4) that are or can be temporarily closed.

2. The pot for hydroponics according to Claim 1, **characterized by** the fact that the closed openings (4) have specifically positioned linear material weakenings.

3. The pot for hydroponics according to Claim 2, **characterized by** the fact that the linear material weakenings consist of specifically positioned perforations, specifically positioned punched lines or specifically positioned nominal breaking points.

4. The pot for hydroponics according to one of Claims 1-3, **characterized by** the fact that the closed openings (4) contain means (5) for uncovering the openings.

5. The pot for hydroponics according to Claim 4, **characterized by** the fact that the means consist of apertures (5) or material projections.

6. The pot for hydroponics according to Claim 1, **characterized by** the fact that the closable openings (4) are provided with a temporary cover (8).

7. The pot for hydroponics according to Claim 6, **characterized by** the fact that the temporary cover (8) is bonded over the openings.

## Revendications

1. Pot pour hydroculture avec des ouvertures (1) se trouvant dans sa paroi de pot inférieur, **caractérisé en ce que** la paroi de pot présente des passages (4) fermés ou pouvant être fermés temporairement.

2. Pot pour hydroculture selon la revendication 1, **caractérisé en ce que** les passages (4) fermés présentent des points faibles de matériau en forme de ligne et mis en place de façon ciblée.

3. Pot pour hydroculture selon la revendication 2, **caractérisé en ce que** les points faibles de matériau en forme de ligne sont des perforations introduites de façon ciblée, des découpages effectués de façon ciblée ou des points de rupture théorique introduits de façon ciblée.

4. Pot pour hydroculture selon l'une quelconque des revendications 1 à 3, **caractérisé en ce que** les passages (4) fermés contiennent des dispositifs (5) pour enlever les passages.

5. Pot pour hydroculture selon la revendication 4, **caractérisé en ce que** les dispositifs sont des ouvertures (5) ou des parties saillantes de matériau.

6. Pot pour hydroculture selon la revendication 1, **caractérisé en ce que** les passages (4) pouvant être fermés sont pourvus d'un revêtement (8) temporaire.

7. Pot pour hydroculture selon la revendication 6, **caractérisé en ce que** le revêtement (8) temporaire est collé au-dessus des passages.
